# EUROPEAN PATENT SPECIFICATION

(11) **EP 0 864 109 B1**
(45) Date of publication and mention of the grant of the patent: **04.10.2001**
(21) Application number: 96940663.6
(22) Date of filing: 28.11.1996
(51) Int. Cl.: G02B 6/16, G02B 6/18, B29D 11/00

(54) **METHOD OF MAKING GRADED INDEX POLYMERIC OPTICAL FIBRES**
METHODE ZUR HERSTELLUNG VON OPTISCHEN INDEXGRADIENTEN-FASERN AUS POLYMERMATERIAL
PROCEDE DE FABRICATION DE FIBRES OPTIQUES POLYMERES A GRADIENT D'INDICE

(30) Priority: 30.11.1995 EP 95203295
(43) Date of publication of application: 16.09.1998
(73) Proprietor: Akzo Nobel N.V., 6824 BM Arnhem (NL)
(72) Inventor: KRINS, Bastiaan, NL-6932 LP Westervoort (NL); BRINKHUIS, Richard, Hendrikus, Gerrit, NL-8011 NP Zwolle (NL)
(74) Representative: Schalkwijk, Pieter Cornelis
(86) International application number: EP9605371
(87) International publication number: WO9720240

(56) References cited:
- EP-A- 0 451 266
- WO-A-96/36478
- PATENT ABSTRACTS OF JAPAN vol. 014, no. 185 (P-1036), 13 April 1990 & JP 02 033104 A (MITSUBISHI RAYON CO LTD), 2 February 1990, cited in the application
- PATENT ABSTRACTS OF JAPAN vol. 018, no. 532 (P-1810), 7 October 1994 & JP 06 186441 A (TORAY IND INC), 8 July 1994, cited in the application

## Description

### (a) Field of the Invention

The invention pertains to a method of making polymeric optical fibres having a refractive index which gradually decreases from the centre of the fibre to the periphery (a graded index polymer optical fibre).

Graded index polymer optical fibres can be used for broadband optical transmission. In view of the increasing trend to replace electric wire transmission with optical fibre transmission, it will become necessary to provide homes and offices with optical fibre connections ("fibre to the home"). Since broadband optical fibre connections require too precise an alignment to be handled without professional skill and apparatus, interconnection means are needed in order to magnify. the optical channel to home and office handling size. For this purpose graded index polymer optical fibres may be highly suitable, as they provide a relatively large bandwidth and may have a relatively large diameter.

### (b) Background Art

Graded index polymer optical fibres, and methods of making them, are known. Thus, a method of making a graded index polymer optical fibre comprising a spinning process employing spinning masses comprising a core spinning mass and a sheath spinning mass, the spinning masses comprising a polymer, a polymerizable monomer, and an initiator, wherein the monomer in the core spinning mass has a higher refractive index than the monomer in the sheath spinning mass, and wherein the spinning masses are extruded and cured, is known from Ho et al. in Polymer Journal, Vol. 27, 1995, pages 310-313.

Ho et al. disclose a top to bottom spinning process for the preparation of a gradient-index polymer fibre by extruding a core spinning mass containing poly(methyl methacrylate) and benzyl methacrylate and a sheath spinning mass containing poly(methyl methacrylate) and methyl methacrylate into an enclosed diffusion zone which is maintained at 80°C and subsequent UV curing. The speed of this spinning process is up to 2.5 m/min. The obtained fibre, having a diameter of 1 mm, has a quadratic distribution of refractive index of only 62% of the diameter of the fibre. In the process of Chen, Ho et al. described in Journal of Applied Polymer Science, Vol. 60, 1996, pages 1379-1383, this fibre is subsequently extruded through a smaller orifice to remove 40% of the outermost portion of the fibre. The obtained fibre is to be used as an imaging lens.

A disadvantage of the method of Ho et al. is that it fails to provide fibres with the desired refractive index profile suitable for the above-mentioned purpose. A further disadvantage of this method is that UV curing is performed using UV-C light (253 nm), which requires special precautions with respect to the safety of the work environment.

Several other methods are known which disclose the manufacture of fibres having a graded refractive index profile. EP 451 266 discloses a bottom to top spinning process for the preparation of a fibre consisting of two or more layers. Polymers and monomers that are used in this method are, e.g., poly(methyl methacrylate) and methyl methacrylate, benzyl methacrylate, 2,2,3,3-tetrafluoropropyl methacrylate, and 2,2,3,3,4,4,5,5-octa-fluoropentyl methacrylate, or mixtures of these monomers. During diffusion volatilizing substances released from the fibre are removed by a stream of an inert gas such as nitrogen. Optical transmission elements with three or four layers and having a radius of 0.4-0.6 mm and a length of 13.5-18.4 mm are provided, which elements are used as lenses in an image transmitting array of a copying machine. The optical transmission element has a quadratic refractive index distribution in the range of 0.25-0.75rₒ from the centre of the element.

A disadvantage of this method is that the speed of this bottom to top process is low, i.e., 0.5 m/min. Another drawback is that the evaporated monomers have to be taken care of, i.e., either processed as waste or recycled, which is detrimental to the economics of the process. It is desired to provide a fast and economical process in which the spinning occurs from top to bottom, providing a graded refractive index polymeric optical fibre having the desired refractive index distribution profile.

Similar methods and optical transmission elements are known from EP 447 548 and EP 527 239. The method of EP 447 548 provides an optical transmission element consisting of three or more layers and having a quadratic refractive index distribution in the range of 0.25-0.70rₒ from the centre of the element. This method has the same disadvantages as described above for EP 451 266.

The method of EP 527 239 provides a plastic graded-index transmission element consisting of three or more layers, having a radius of 0.45 ±0.1 mm, and possessing a quadratic refractive index distribution in the range of 0.25-0.8rₒ from the centre of the element. It is stated that when only a core and a sheath spinning mass mutually varying in refractive index are used, it is difficult to make a fibre having a quadratic refractive index distribution in the range of 0.25 to about 0.70rₒ from the centre of the fibre. Therefore, in this method, from a preform fibre an outer peripheral portion is eliminated. The resulting fibres are used as lenses in copiers and facsimiles. Apart from being a bottom to top process in which monomers are evaporated from the fibre, the handling of fibres having a radius smaller than 0.35 mm also presents a problem.

JP 96/ 106,016 discloses a method of manufacturing a plastic optical fibre which can be used as an optical information communication medium. Each spinning solution comprises a polymer, a polymeric monomer, and a nonpolymeric compound. The addition of the non-polymerizable compound to the spinning solution is essential for obtaining a continuously distributed refractive index. This process suffers from the same drawbacks as described above for EP 451 266. It is a bottom to top process and the non-polymerizable compound is partially volatilized. A further disadvantage of this process is that the non-polymerizable compound remains in the fibre as a plasticizer and may lead to instability as a result of further diffusion of the low-molecular weight compound. Similar methods have been disclosed in JP 96/ 106,013 and JP 96/106,014.

Further, a method comprising a bicomponent spinning process employing a core spinning mass and a sheath spinning mass is disclosed in JP 94/ 186,441. A refractive index distribution type plastic optical transmission body is produced by discharging a polymer monomer mixture determined by a 50-90% conversion from the outside discharge hole of a nozzle plate with a double concentric discharge hole, while simultaneously discharging a monomer mixture or a polymer monomer mixture of conversion 50% or less from the inside discharge hole. The latter mixture contains a non-polymerizable colourless transparent compound with a high refractive index, such as benzyl butyl phthalate. Said mixtures are discharged to produce a core-sheath composite rod. The high refractive index compound is diffused from the mixture in the inner layer (the core mixture) into the mixture in the outer layer (the sheath mixture). Further polymerization of the discharged rod results in an optical transmission body with a refractive index distribution which continuously decreases from the centre toward the periphery. To prepare an optical fibre from the rod, the rod is drawn to the desired fibre diameter.

A disadvantage of this method is its multi-stage character. The separate steps of discharging a rod, post-polymerizing the rod, and drawing it to a fibre, make for an inherently not fully economical process. Also, the step of forming the graded index rod is slow. It is desired to provide a process which yields a fibre directly, i.e., without first having to form a rod to be drawn. It is further desired that such a process be a one-step, preferably continuous process.

Apart from its objectionable multi-stage character, this process has a further drawback in that the non-polymerizable high refractive index compound, which is miscible with the sheath and core polymers, remains in the system as a plasticizer. Further, the presence of such a low-molecular weight compound means that the eventual optical fibre may be prone to temperature induced instability as a result of further diffusion of the low-molecular weight compound. It is therefore desired to provide a graded index polymeric optical fibre where the refractive index distribution is fixed in the polymer.

Methods of providing polymeric optical fibres where the refractive index distribution in the eventual fibre is not determined by the presence of a low-molecular weight compound are known.

In this respect JP 90/ 33,104 is referred to. Disclosed is a method of making a graded index polymer optical fibre, again by means of bicomponent spinning of a core and a sheath spinning mass. The sheath is spun from a mixture of a polymer, e.g, poly(methyl methacrylate), and a monomer, e.g., methyl methacrylate. The core is spun from a high refractive index monomer, e.g., phenyl methacrylate. After having been discharged through a bicomponent spinning nozzle, the spun core-sheath filament is passed through a heated tube to effect diffusion and then subjected to UV irradiation to effect photopolymerization. Thus, a core-sheath optical fibre is formed in which, due to diffusion of the methyl methacrylate and phenyl methacrylate monomers, a refractive index distribution is attained. The index distribution is fixed in a polymeric structure as a result of the polymerization.

This process is not carried out at the desired rate either, typical residence times in the heated tube and during irradiation being about three minutes each. Further, the process has a drawback in that the core does not contribute to the filament forming.

In JP 91/ 42,604 a different method is disclosed. Here, a graded index polymer optical fibre is made by bicomponent spinning, the core material comprising a polymer-monomer mixture and the sheath material being a low refractive index polymer, e.g., poly(tetrafluoropropyl methacrylate). This method also requires a too long process time, again involving a heated tube and UV irradiation.

For carrying out the JP 90/ 33,104 and JP 91/ 42,604 methods, a bicomponent spinning apparatus is used in which the spinning masses are discharged from the bottom to the top. For the sake of practicality it is desired to provide a process for making graded index polymer optical fibres in which the introduction of the refractive index distribution is sufficiently fast to allow normal spinning (in which a spinning mass is discharged from the top to the bottom of the spinning apparatus).

Several other methods of making graded index polymer optical fibres have been disclosed in the art. Thus, JP 77/ 5857 pertains to a method in which a rod is formed by incompletely polymerizing a high refractive index monomer (diallyl phthalate). A monomer having a lower refractive index (methyl methacrylate) is diffused into the rod under simultaneous polymerization. A similar method is disclosed in JP 81/ 37521. A partially polymerized high refractive index polymer is placed in a monomer which is in the gaseous phase, and this then diffuses into the polymer with further polymerization taking place.

JP 88/ 94,228 discloses a method wherein a high and a low refractive index spinning mass containing a polymer, a vinyl monomer, and a photosensitizer are mixed and spun into a coaxial multilayer graded index optical fibre, with part of the vinyl monomer being evaporated from the spun fibre. This method is not based on diffusion of monomers with different refractive indices.

EP 615,141 describes a method comprising melting a transparent polymer, injecting into the central portion of said melt a transparent and diffusible material having a refractive index different from that of said transparent polymer or a material containing said transparent and diffusable material and a transparent polymer, and performing an extrusion melt moulding to form a plastic optical transmission medium. In this method, neither the core nor the sheath spinning mass comprises a polymer as well as a polymerizable monomer.

In JP 79/ 30301 two different monomers are heterogeneously copolymerized so as to form a gradient in the monomer composition. In JP 86/ 130904 a mixture of monomers having different refractive indices is subjected to curing from the outside. The monomer mixture on the inside becomes enriched with the higher refractive index monomer.

In EP 208 159 a polymer monomer mixture is extruded, the monomer being volatile and having a relatively high refractive index. Vaporization from the outside leads to the core having a higher refractive index monomer than the sheath. A similar method using a vinylidene fluoride type resin and a methacrylate type monomer has been disclosed in JP 96/106,019.

In EP 496 893 a poly(methyl methacrylate) tube is made and filled with a monomer mixture of methyl methacrylate and benzyl methacrylate. A graded index rod is formed by rotating the tube (about 20 hours) under polymerization conditions. The rod is drawn to a graded index polymer optical fibre. Also in EP 497 984 a polymeric tube is made and filled with monomer. A rod having a graded index of refraction results from diffusion. A graded index polymer optical fibre is drawn from the rod.

All of these background art disclosures are unattractive methods which do not satisfy the aforementioned desires. The invention seeks to overcome the above problems and to provide an efficient method of making a graded refractive index polymer optical fibre which can be carried out as a fast continuous spinning process (preferably even up to 10 m/min or faster) and which provides an optical fibre having the desired round shape and refractive index profile.

### (c) Disclosure of the Invention

### 1. Summary

In order to meet these and other objectives, the invention resides in a method of making a graded index polymer optical fibre comprising a spinning process employing spinning masses comprising a core spinning mass and a sheath spinning mass, the spinning masses comprising a polymer, a polymerizable monomer and, optionally, an initiator, wherein the monomer in the core spinning mass has a higher refractive index than the monomer in the sheath spinning mass, and wherein the spinning masses are extruded and cured, which method is characterized in that the spinning conditions are chosen such that the monomers are contained within the fibre to an amount of at least 95% during extrusion and curing and the total of the spinning masses is intrinsically thread forming.

### 2. Detailed Description

Bi- and multicomponent spinning processes are known to the person of ordinary skill in the art. A description of the basic principles can, e.g., be found in D.R. Paul and S. Newman, Polymer Blends, Chapter 16: Fibers from polymer blends, pages 176-177. In bicomponent spinning processes generally the core and sheath spinning masses are extruded simultaneously through a spinneret, the core-sheath configuration being attained either by means of the shape of the spinneret (e.g., having orifices with two concentric holes) or by means of a tube through which the core spinning mass is extruded placed just in advance of a regular spinneret.

In the process of the invention, the refractive index distribution develops from a clear stepwise distribution just after the spinning masses have passed the spinneret to the desired gradual decrease from the centre of the core to the periphery of the sheath. For, just after passage of the spinning points (which in the preferred top to bottom spinning process will be just underneath the spinneret), the refractive index distribution is determined by the refractive index difference between the two spinning masses. This starting difference of the refractive indices of the core and sheath spinning masses will generally be of the order of 0.01 to 0.1. It is preferred for this difference to be relatively large, as this provides the largest numerical aperture, and the greatest degree of freedom in determining the eventual steepness of the distribution, while retaining an adequate process rate.

The extrusion of both spinning masses leads to the continuous formation of a thread (in this case an optical fibre). At a fixed point of the formed thread, the diffusion of the higher and lower refractive index monomers will lead to the core becoming richer in lower index monomer and poorer in higher index monomer, while the reverse holds for the sheath. Thus, upon further propagation of the extruded filaments, what was the stepwise distribution just after the spinning points more and more becomes a gradual distribution. Should the diffusion process be allowed to proceed freely, then eventually the refractive index difference between core and sheath would be flattened out.

In order to have the desired refractive index distribution become fixed in the polymeric fibre, the monomers are made to polymerize or copolymerize into polymers. To this end, it is desired that both the core and the sheath spinning mass comprise a polymerization initiator, preferably a UV initiator. A preferred UV initiator comprises 2,4,6-trimethyl benzoyl diphenyl phosphine oxide (Lucirin TPO), since this compound possesses a high efficiency. Where polymerization has taken place, the diffusion of monomers is inhibited. In actual practice there may be a difference in curing over the diameter of the fibre. For the man skilled in the art it is common general knowledge how to avoid this by the proper combination of type and concentration of initiator. With proper selection of the spinning rate and the UV irradiation duration, the process can be carried out in such a manner that completion of the polymerization coincides with the point in time at which the desired refractive index distribution has been achieved.

As regards producing a thread having the desired round shape and a tailored refractive index distribution, choosing such spinning conditions that the monomers are substantially contained within the fibre during extrusion and curing and using a total of the spinning masses which is intrinsically thread forming has been found to give an unexpected, highly positive effect. In the cited background art disclosures a fibre can be spun only after evaporation of monomers from the sheath spinning mass. As a result there is poor control over the diffusion process of the monomers in terms of reproducibility and refractive index profile. In the present application, substantially means that at least 95% of the monomers are contained within the fibre.

It is preferred that at least 97% of the monomers be contained within the fibre. More preferably, at least 99% of the monomers are contained within the fibre. It is preferred most to have the monomers completely contained within the fibre. Containment of the monomers within the fibre during extrusion can be achieved in various ways. The spinning masses can be extruded into an inert gas atmosphere, for example nitrogen, which is saturated with one or more of the monomers that are used in the spinning masses. Preferably, the inert gas atmosphere is saturated with the monomer or monomers of the sheath spinning mass. It is preferred that the spinning masses be extruded into an inert liquid. By inert is meant that the liquid does not mix, dissolve, coagulate or react with the monomers. Suitable inert liquids include water, and di- and triethylene glycol. Extrusion into water is particularly preferred. A further effect of extruding into an inert liquid, which can be attained if the inert liquid has a density about equal to that of the extruded gel, is that the spinning rate can be tailored more satisfactorily since gravity effects are neutralized and the spinning of masses having a lower melt strength is made possible.

One other way of achieving that the monomers are substantially contained within the fibre is choosing a monomer or monomers with a high boiling point (bp), i.e., having a boiling point of more than 50°C above the spinning temperature. Preferably, the monomer or monomers have a boiling point which is more than 100°C above the spinning temperature. It is preferred that at least the sheath monomer be a high-boiling monomer. Suitable high-boiling monomers are 2,2,3,3,-tetrafluoropropyl methacrylate (bp 69-70°C/51 mm) and 2,2,3,3,4,4,5,5-octafluoropentyl methacrylate (bp 87-88°C/40 mm). The skilled person will have no problem in choosing other spinning conditions in order to achieve that the monomers are substantially contained within the fibre; one other way, for instance, is to provide the fibre with a polymeric skin during extrusion.

By an intrinsically thread forming total of the spinning masses is meant that the total spinning solution as such forms a thread without the necessity, as in the prior art, of evaporating monomer. In order to achieve that the total of the spinning masses forms a thread, it is necessary that at least one of the spinning masses is an intrinsically thread forming spinning mass. In this case it is of course of importance that the volume ratio of the spinning masses is chosen such that the total of the spinning masses forms a thread. It is preferred that each spinning mass forms a thread. The ability of a spinning solution to form a thread depends on the molecular weight of the polymer, the chosen polymer and monomer, and the desired concentration of the polymer in the polymer-in-monomer solution. The ability of a polymer-in-monomer solution to form a thread is determined by a spinning experiment performed at a temperature of 85°C or lower, using a capillary with a diameter of 1 mm, extrusion into water, and using a speed of 1.0 ml/min.

For a given system of polymers, monomers, UV initiator, and wavelength of irradiation, the person of ordinary skill in the art can thus determine the conditions for making graded index polymer optical fibres without undue experimentation. A further disclosure of the variations that can be made within the scope of the invention follows hereinafter.

An important variable is the polymer concentration in the spinning masses. If the core and sheath spinning masses have a polymer concentration which is sufficiently low, the rate of diffusion of both the high refractive index monomer and the low refractive index monomer will be high enough not to limit the spinning process rate. Surprisingly, with the method of the invention it has been found possible to obtain a process in which diffusion takes place at such a high rate that the graded index polymer optical fibres can be produced in a continuous spinning process at a rate of approximately 5.5 m/min. To this end, the core and sheath spinning masses are solutions of the polymer in the monomer having a polymer concentration of from 20 to 70% by weight. A high rate of diffusion being most advantageous, it is preferred that the polymer concentration be within a range of from 30 to 60 wt.%.

In both the core and the sheath spinning mass the combination of a polymer and a monomer not only leads to the unexpectedly high process rates that are attainable, it also has the advantage that, even at high spinning rates, filaments of sufficient sturdiness can be formed.

In order to obtain a graded index polymer optical fibre having optimum properties in respect of optical transmission, the core and sheath polymers are desired to be chemically identical. Preferably, they will also be the same physically. More preferably, they will have the same concentration in the core and sheath spinning mass. Apart from positively affecting the final properties of the fibre, this also makes for a surprisingly simple and convenient process. For, with the core and sheath polymers being the same, the refractive index differences in the core and sheath spinning masses (and thus in the final graded index polymer optical fibre) are determined by the monomer selection only. Preferably, this difference is of from 0.01 to 0.1.

Within the framework of this description, the refractive index of a monomer is considered to be proportional to the refractive index of the corresponding homopolymer. The refractive index of the interpolymers that result from the copolymerization of the high and low index monomers in combination with the original polymers is proportionally related to the amount of each monomer incorporated into such interpolymers.

It is further preferred for the monomer in one of the two spinning masses to be corresponding to the polymer comprised in the same spinning mass. While this does not exclude that in each of the spinning masses the monomer and the polymer correspond, and that the core and the sheath thus comprise a different polymer, it is preferred, in order to avoid a stepwise refractive index distribution, that the polymers be the same, and for either the core spinning mass or the sheath spinning mass to contain the corresponding monomer.

For reasons of processability, cheap high-molecular weight availability, and good optical properties, it is preferred that the polymer in both the core and the sheath spinning masses be poly(styrene-co-acrylonitrile) or poly(methyl methacrylate). In the former case it is further preferred that the sheath monomer be methyl methacrylate and the core monomer have a higher refractive index than methyl methacrylate. The monomer in that case preferably is an acrylic monomer. Examples of higher index acrylic monomers are benzyl methacrylate, phenyl methacrylate, 1-phenylethyl methacrylate, 2-phenylethyl methacrylate, furfuryl methacrylate, and 2-chloroethyl acrylate. Benzyl methacrylate is preferred most. If the polymer in both the core and the sheath spinning masses is poly(methyl methacrylate), it is further preferred that the core monomer be methyl methacrylate and the sheath monomer have a lower refractive index than methyl methacrylate, preferably 2,2,3,3-tetrafluoropropyl methacrylate. Surprisingly, with the method of the invention it has proved possible to obtain polymeric optical fibres which have a quadratic distribution of refractive index of 89% of the diameter.

It should be noted that suitable optical polymers and corresponding or analogous higher and lower refractive index monomers are known to the person of ordinary skill in the art. Thus graded index materials and components have been described by Y. Koike in Polymers for lightwave and integrated optics, L.A. Hornak ed., Chapter 3, pp. 71-104.

If it is desired to make graded index polymer optical fibres for use in the near-infrared region (near-IR), optical attenuation caused by the absorption of light by overtones of the vibrational frequencies of hydrogen atoms-containing bonds, especially O-H, N-H, C-H, should be avoided as much as possible. This can be achieved by replacing the hydrogen atoms with heavier elements. Also in other wavelength regions, the replacement in polymeric light guides of hydrogen atoms by heavier elements may bring about a favourable widening of the frequency ranges in which absorption minima are to be found.

Mostly, however, the graded index polymer optical fibres of the invention will be used with visible light. This has advantages in the case of optical fibre connections being made in-house. Further, the preferred material, poly(methyl methacrylate) is mostly used with visible light, as it has an absorption minimum in that region.

As hydrogen replacing elements at any rate preference is given to fluorine and/or chlorine, since these may be used to further tune the refractive index. F and Cl have contrasting individual effects: while fluorine may cause a sharp lowering of the refractive index, chlorine causes it to become higher. Examples of such halogenated monomers are 2,2,3,3,-tetrafluoropropyl methacrylate and 2,2,3,3,4,4,5,5-octafluoropentyl methacrylate.

For further elucidation and not limitation, there follows a description of Examples 1 and 2 according to the invention and of a Comparative Example.

Two gels are processed to a core-sheath fibre in a bicomponent spinning process. The spinning masses (gels) are prepared by dissolving the polymer(s) in the respective monomers at 80°C with stirring. In order to avoid thermal curing, it is preferred to add an inhibitor, such as hydroquinone, benzoquinone or methoxyphenol, to the spinning masses. An initiator, such as Lucirin TPO, is added in order to be able to conduct UV curing.

The spinning equipment is provided with two plunger pumps, one for the core, and one for the sheath. The pumps are filled with the spinning masses by pouring, after which the spinning equipment is put together. From the plunger pumps, two conduits lead to a bicomponent spinneret, through which a core-sheath fibre is formed. By tailoring the discharge of the plunger pumps, the composition of the fibre in terms of the volume ratio between sheath and core can be chosen as desired (e.g. of from 20/80 to 80/20). In commercial practice, continuous dosing systems will be preferred to the plunger pumps.

Upon spinning, the formed thread is surrounded by a glass tube containing, for example, nitrogen gas saturated with one or more of the monomers used. Preferably, the glass tube contains an inert liquid, such as water. After a predetermined distance (over which diffusion of monomers takes place) a curing section is provided comprising a number of UV sources, the radiation of which preferably is of from 300 to 450 nm. The emission more preferably is of from 350 to 400 nm, as these wavelengths have a favourable penetration depth, and suitable initiators are available. Employed is, e.g., Philips TL/10 (340-400 nm).

It should be noted that the ideal situation is that in a first stage diffusion takes place in order to form the desired refractive index profile, and in a second stage this profile is fixed by UV-curing. In practice, however, these stages will generally overlap, since the rate of curing is of the same order of magnitude (seconds) as the rate of diffusion. The man skilled in the art will be able to determine, without undue experimentation, and using his due skill with regard to curing over relatively large distances (thick layers, large diameters, i.e. mm scale rather than thin films of nm scale), the point in time at which curing should commence so as to obtain the desired refractive index profile. In this respect, J. Rad. Curing, 1980, 7(2), p. 20 is referred to, as well as J.G. Woods, "Radiation curable adhesives," in Radiation Curing: Science and Technology (S.P. Pappas, ed.), Plenum Publishers, New York, 1992, Chapter 9.

After curing, the thus consolidated graded index optical fibre is removed from the extrusion medium and wound.

### EXAMPLE 1

A solution of poly(styrene-co-acrylonitrile) (SAN) (trade name Lustran 32 of Monsanto, Mw = 200,000 as measured by HPLC) in methyl methacrylate (MMA) with a concentration of 50.0 wt.% was made. The solution contained 50 ppm hydroquinone as an inhibitor of thermal polymerization and 1.0 wt.% 2,4,6-trimethyl benzoyl diphenyl phosphine oxide (Lucirin TPO of BASF) as a UV-initiator. In the same way a second solution of SAN (Lustran 32) in a mixture of benzyl methacrylate (BzMA) and MMA (70/30 by weight) with a concentration of 48.2 wt.% was made.
In a spinning experiment two high-pressure syringe pumps were filled with these solutions. The two pumps were connected to a bicomponent spinneret. The spinning temperature was 75°C. A bicomponent fibre with the solution in MMA in the sheath, and the solution in BzMA/MMA in the core, was spun through a capillary of 1 mm in diameter into a bath containing water. The extrusion speed was 1.2 m/min, the volume ratio of skin to core was 50:50. The take up speed was 5.5 m/min.

Below the spinneret a diffusion section was created with a length of 60 cm, followed by a curing section with a length of 150 cm. The draw down took place in the diffusion section. The curing section contained 24 UV tubes, in a circle around the spinning filament, with a radiation between 350 and 400 nm. (Philips TL/10).
The resulting fibre had a quadratic distribution of refractive index of 89% of the diameter (i.e., from the centre of the fibre up to 89% of the radius).

### EXAMPLE 2

Example 1 was repeated, but now the spinning masses were extruded into a nitrogen atmosphere which was saturated with the monomer from the sheath spinning mass, i.e., MMA; a fibre with the same refractive index profile was obtained.

### COMPARATIVE EXAMPLE

A solution of PMMA (Röhm 7H) in MMA with a concentration of 52.4 wt.% was made. The solution contained 50 ppm hydroquinone as an inhibitor of thermal polymerization and 1.0 wt.% Lucirin TPO as a UV-initiator. In the same way a second solution of PMMA (Röhm 7H) in BzMA/MMA (70/30) with a concentration of 50.6 wt.% was made.
A spinning experiment was performed in exactly the same manner as in Example 1, with the solution in MMA in the sheath and the solution in BzMA/MMA in the core.
No fibre could be wound.

## Claims

1. A method of making a graded index polymer optical fibre comprising a spinning process employing spinning masses comprising a core spinning mass and a sheath spinning mass, the spinning masses comprising a polymer, a polymerizable monomer and, optionally, an initiator, wherein the monomer in the core spinning mass has a higher refractive index than the monomer in the sheath spinning mass, and wherein the spinning masses are extruded and cured, **characterized in that** the spinning conditions are chosen such that the monomers are contained within the fibre to an amount of at least 95% during extrusion and curing and the total of the spinning masses is intrinsically thread forming.

2. A method according to claim 1, **characterized in that** the spinning masses are extruded into an inert liquid.

3. A method according to claim 2, **characterized in that** the inert liquid is water.

4. A method according to any one of the preceding claims, **characterized in that** the spinning masses are solutions of the polymer in the monomer having a polymer concentration of from 20 to 70% by weight.

5. A method according to claim 4, **characterized in that** in each spinning mass the same polymer is used.

6. A method according to claim 5, **characterized in that** the polymer is poly(methyl methacrylate).

7. A method according to any one of claims 1 to 4, **characterized in that** the sheath spinning mass comprises poly(methyl methacrylate) and 2,2,3,3-tetrafluoropropyl methacrylate and the core spinning mass comprises poly(methyl methacrylate) and methyl methacrylate.

8. A method according to any one of claims 1 to 4, **characterized in that** the sheath spinning mass comprises poly(styrene-co-acrylonitrile) and methyl methacrylate and the core spinning mass comprises poly(styrene-co-acrylonitrile) and benzyl methacrylate.

9. A method according to claim 1, **characterized in that** at least the sheath monomer is a high boiling monomer.

10. A method according to any one of the preceding claims, **characterized in that** the initiator is a UV initiator.

11. A method according to claim 10, **characterized in that** the UV initiator comprises 2,4,6-trimethyl benzoyl diphenyl phosphine oxide.

12. A method according to any one of the preceding claims, **characterized in that** UV curing is effected by irradiation at a wavelength of from 350 to 400 nm.

## Patentansprüche

1. Verfahren zur Herstellung einer polymeren optischen Gradientenfaser, das ein Spinnverfahren umfasst, bei dem Spinnmassen eingesetzt werden, die eine Kernspinnmasse und eine Mantelspinnmasse umfassen, wobei die Spinnmassen ein Polymer, ein polymerisierbares Monomer und gegebenenfalls einen Initiator umfassen, wobei das Monomer in der Kernspinnmasse einen höheren Brechungsindex hat als das Monomer in der Mantelspinnmasse und wobei die Spinnmassen extrudiert und gehärtet werden, **dadurch gekennzeichnet, dass** die Spinnbedingungen so gewählt werden, **dass** die Monomere in der Faser während der Extrusion und der Härtung in einer Menge von wenigstens 95% enthalten sind und die Gesamtheit der Spinnmassen intrinsisch fadenbildend ist.

2. Verfahren gemäß Anspruch 1, **dadurch gekennzeichnet, dass** die Spinnmassen in eine inerte Flüssigkeit hinein extrudiert werden.

3. Verfahren gemäß Anspruch 2, **dadurch gekennzeichnet, dass** es sich bei der inerten Flüssigkeit um Wasser handelt.

4. Verfahren gemäß einem der vorstehenden Ansprüche, **dadurch gekennzeichnet, dass** es sich bei den Spinnmassen um Lösungen des Polymers im Monomer mit eiher Polymerkonzentration von 20 bis 70 Gew.-% handelt.

5. Verfahren gemäß Anspruch 4, **dadurch gekennzeichnet, dass** in jeder Spinnmasse dasselbe Polymer verwendet wird.

6. Verfahren gemäß Anspruch 5, **dadurch gekennzeichnet, dass** es sich bei dem Polymer um Polymethylmethacrylat handelt.

7. Verfahren gemäß einem der Ansprüche 1 bis 4, **dadurch gekennzeichnet, dass** die Mantelspinnmasse Polymethylmethacrylat und 2,2,3,3-Tetrafluorpropylmethacrylat umfasst und die Kernspinnmasse Polymethylmethacrylat und Methylmethacrylat umfasst.

8. Verfahren gemäß einem der Ansprüche 1 bis 4, **dadurch gekennzeichnet, dass** die Mantelspinnmasse Poly(styrol-co-acrylnitril) und Methylmethacrylat umfasst und die Kernspinnmasse Poly(styrol-co-acrylnitril) und Benzylmethacrylat umfasst.

9. Verfahren gemäß Anspruch 1, **dadurch gekennzeichnet, dass** wenigstens das Mantelmonomer ein hochsiedendes Monomer ist.

10. Verfahren gemäß einem der vorstehenden Ansprüche, **dadurch gekennzeichnet, dass** der Initiator ein UV-Initiator ist.

11. Verfahren gemäß Anspruch 10, **dadurch gekennzeichnet, dass** der UV-Initiator 2,4,6-Trimethylbenzoyldiphenylphosphinoxid umfasst.

12. Verfahren gemäß einem der vorstehenden Ansprüche, **dadurch gekennzeichnet, dass** die UV-Härtung durch Strahlung mit einer Wellenlänge von 350 bis 400 nm bewirkt wird.

## Revendications

1. Procédé de préparation d'une fibre optique polymère à indice gradué comprenant un procédé de filage employant des masses de filage comprenant une masse de filage de coeur et une masse de filage de gaine, les masses de filage comprenant un polymère, un monomère polymérisable et, en option, un amorceur, où le monomère dans la masse de filage de coeur a un indice de réfraction supérieur à celui du monomère dans la masse de filage de gaine, et dans lequel les masses de filage sont extrudées et polymérisées, **caractérisé en ce que** les conditions de filage sont choisies de façon que les monomères soient contenus à l'intérieur de la fibre en une quantité d'au moins 95 % durant l'extrusion et la polymérisation et que le total des masses de filage forme un fil de façon intrinsèque.

2. Procédé selon la revendication 1, **caractérisé en ce que** les masses de filage sont extrudées dans un liquide inerte.

3. Procédé selon la revendication 2, **caractérisé en ce que** le liquide inerte est l'eau.

4. Procédé selon l'une quelconque des revendications précédentes, **caractérisé en ce que** les masses de filage sont des solutions du polymère dans le monomère ayant une concentration de polymère de 20 à 70 % en poids.

5. Procédé selon la revendication 4, **caractérisé en ce que** dans chaque masse de filage, le même polymère est utilisé.

6. Procédé selon la revendication 5, **caractérisé en ce que** le polymère est le poly(méthacrylate de méthyle).

7. Procédé selon l'une quelconque des revendications 1 à 4, **caractérisé en ce que** la masse de filage de gaine comprend du poly(méthacrylate de méthyle) et du méthacrylate de 2,2,3,3-tétrafluoropropyle et la masse de filage de coeur comprend du poly(méthacrylate de méthyle) et du méthacrylate de méthyle.

8. Procédé selon l'une quelconque des revendications 1 à 4, **caractérisé en ce que** la masse de filage de gaine comprend du copoly(styrène/acrylonitrile) et du méthacrylate de méthyle et la masse de filage de coeur comprend du copoly (styrène/acrylonitrile) et du méthacrylate de benzyle.

9. Procédé selon la revendication 1, **caractérisé en ce qu'**au moins le monomère de gaine est un monomère à haut point d'ébullition.

10. Procédé selon l'une quelconque des revendications précédentes, **caractérisé en ce que** l'amorceur est un amorceur UV.

11. Procédé selon la revendication 10, **caractérisé en ce que** l'amorceur UV comprend de l'oxyde de 2,4,6-triméthylbenzoyldiphénylphosphine.

12. Procédé selon l'une quelconque des revendications précédentes, **caractérisé en ce que** la polymérisation UV est effectuée par irradiation à une longueur d'onde de 350 à 400 nm.
